# EUROPEAN PATENT SPECIFICATION

(11) **EP 2 081 969 B1**
(45) Date of publication and mention of the grant of the patent: **18.09.2019**
(21) Application number: 07846626.5
(22) Date of filing: 16.11.2007
(51) Int. Cl.: C08F 10/00, C08F 4/656

(54) **METHOD FOR CATALYST PREPARATION AND PROCESS OF POLYOLEFIN POLYMERIZATION FROM SAID CATALYST**
VERFAHREN ZUR KATALYSATORHERSTELLUNG UND VERFAHREN ZUR POLYOLEFINPOLYMERISATION MIT DEM KATALYSATOR
PROCÉDÉ DE PRÉPARATION DE CATALYSEUR ET PROCÉDÉ DE POLYMÉRISATION DE POLYOLÉFINE À L'AIDE DUDIT CATALYSEUR

(30) Priority: 16.11.2006 RU 2006140557 U
(43) Date of publication of application: 29.07.2009
(73) Proprietor: DSM IP Assets B.V., 6411 TE Heerlen (NL); Boreskov Institute Of Catalysis, Novosibirsk, 630090 (RU)
(72) Inventor: KIDD, Timothy James, 6224 LH Maastricht (NL); QUIROGA NORAMBUENA, Victor Fidel, 6226 AL Maastricht (NL); MIKENAS, Tatiana Borisovna, Novosibirsk, 630128 (RU); NIKITIN, Valentin Evgenyevich, Novosibirsk, 630128 (RU); ZAKHAROV, Vladimir Aleksandrovich, Novosibirsk, 630090 (RU)
(74) Representative: DSM Intellectual Property
(86) International application number: PCT/EP2007/009917
(87) International publication number: WO 2008/058749

(56) References cited:
- WO-A-2005/097322
- WO-A1-99/05187
- WO-A1-99/05187
- WO-A1-2005/097322
- WO-A1-2005/097322
- DATABASE CA [Online] CHEMICAL ABSTRACTS SERVICE, COLUMBUS, OHIO, US; ZAKHAROV, V. A. ET AL: "Method of preparing catalyst and ethylene polymerization process using thereof", XP002468213, retrieved from STN Database accession no. 2007:1059648 & RU 2 306 178 C1 (BORESKOVA INST KATALIZA SIBIR [RU]) 20 September 2007 (2007-09-20)
- DATABASE CA CHEMICAL ABSTRACTS SERVICE, COLUMBUS, OHIO, US; NIKITIN, V. E. ET AL: "Production of polyethylene using supported Ziegler-Natta catalysts", XP002468214, & RU 2 303 608 C1 (INSTITUT KATALIZA IM. G. K. BORESKOVA SO RAN, RUSSIA) 27 July 2007 (2007-07-27)
- DATABASE CA CHEMICAL ABSTRACTS SERVICE, COLUMBUS, OHIO, US; MIKENAS, T. B. ET AL: "Production of polyethylene using supported Ziegler-Natta catalysts", XP002468215, & RU 2 303 605 C1 (INSTITUT KATALIZA IM. G. K. BORESKOVA SO RAN, RUSSIA) 27 July 2007 (2007-07-27)
- DATABASE CA [Online] CHEMICAL ABSTRACTS SERVICE, COLUMBUS, OHIO, US; ZAKHAROV, V. A. ET AL: "Method of preparing catalyst and ethylene polymerization process using thereof" XP002468213 retrieved from STN Database accession no. 2007:1059648 & RU 2 306 178 C1 (INSTITUT KATALIZA IM. G. K. BORESKOVA SO RAN, RUSSIA) 20 September 2007 (2007-09-20)
- DATABASE CA [Online] CHEMICAL ABSTRACTS SERVICE, COLUMBUS, OHIO, US; NIKITIN, V. E. ET AL: "Production of polyethylene using supported Ziegler-Natta catalysts" XP002468214 retrieved from STN Database accession no. 2007:821107 & RU 2 303 608 C1 (INSTITUT KATALIZA IM. G. K. BORESKOVA SO RAN, RUSSIA) 27 July 2007 (2007-07-27)
- DATABASE CA [Online] CHEMICAL ABSTRACTS SERVICE, COLUMBUS, OHIO, US; MIKENAS, T. B. ET AL: "Production of polyethylene using supported Ziegler-Natta catalysts" XP002468215 retrieved from STN Database accession no. 2007:821063 & RU 2 303 605 C1 (INSTITUT KATALIZA IM. G. K. BORESKOVA SO RAN, RUSSIA) 27 July 2007 (2007-07-27)
- DATABASE CA [Online] CHEMICAL ABSTRACTS SERVICE, COLUMBUS, OHIO, US; ZAKHAROV, V. A. ET AL: "Method of preparing catalyst and ethylene polymerization process using thereof", XP002468213, retrieved from STN Database accession no. 2007:1059648 & RU 2 306 178 C1 (BORESKOVA INST KATALIZA SIBIR [RU]) 20 September 2007 (2007-09-20)
- DATABASE CA CHEMICAL ABSTRACTS SERVICE, COLUMBUS, OHIO, US; NIKITIN, V. E. ET AL: "Production of polyethylene using supported Ziegler-Natta catalysts", XP002468214, & RU 2 303 608 C1 (INSTITUT KATALIZA IM. G. K. BORESKOVA SO RAN, RUSSIA) 27 July 2007 (2007-07-27)
- DATABASE CA CHEMICAL ABSTRACTS SERVICE, COLUMBUS, OHIO, US; MIKENAS, T. B. ET AL: "Production of polyethylene using supported Ziegler-Natta catalysts", XP002468215, & RU 2 303 605 C1 (INSTITUT KATALIZA IM. G. K. BORESKOVA SO RAN, RUSSIA) 27 July 2007 (2007-07-27)

## Description

The invention relates to a method of production of a supported catalyst, the composition of which comprises a titanium compound on a magnesium-containing support, and is intended for the synthesis of ultra high-molecular weight polyethylene with elevated bulk density by suspension polymerization of ethylene in a hydrocarbon solvent.

For production of ultra high-molecular weight polyethylene (UHMWPE) by the suspension method, it is possible to use supported catalysts of the Ziegler type, comprising titanium chlorides and magnesium chlorides, which can be obtained in various ways. In this case polymerization of ethylene is carried out in the absence of hydrogen at polymerization temperatures ≤70°C for production of PE with molecular weight above 1·10⁶ g/mol (the intrinsic viscosity, determined in decalin at 135°C is greater than 10 dl/g). Polymerization is carried out in the presence of a cocatalyst - trialkyl aluminum. An important requirement imposed on a catalyst for synthesis of UHMWPE is the possibility of production of UHMWPE powder with average particle size less than 200 µm, a narrow particle size distribution and elevated bulk density (>0.4 g/cm³). For this it is necessary to use supported catalysts, having average particle size of less than 8 µm, a narrow particle size distribution and low porosity.

UHMWPE can be synthesized in the presence of a catalyst produced by the method [JP 59-53511, B01J 31/32, 1986]. This catalyst contains magnesium chloride as support, obtained by reaction of a solution of the compound MgCl₂•3i-C₈H₁₇OH in a hydrocarbon diluent with TiCl₄ in the presence of an electron-donor compound (ethyl benzoate, ethylanisate and others). The catalyst obtained in this way is characterized by particle size of 5-10 µm, and possesses fairly high activity (up to 35 kg/gPE.g.Ti.h.atmC₂H₄) and permits polyethylene powder to be produced with a narrow particle size distribution and high bulk density. A drawback of this catalyst is the use of low temperatures (down to -20°C) in its manufacture, the use of large quantities of liquid TiCl₄ as the reaction medium, and the evolution of a considerable amount of hydrogen chloride during synthesis of the catalyst.

There is a known supported catalyst for ethylene polymerization, which is obtained by the reaction of a magnesium-aluminum-alkyl compound of composition RMgR'·nAIR"₃·mD with a chlorohydrocarbon and then reaction of the solid product obtained (support) with a titanium halide [DE 3626060, B01J 31/32, 1987]. The organomagnesium compound RMgR' used is (n-Bu)Mg(i-Bu) or (n-Bu)Mg(Oct), which are soluble in hydrocarbons, and it is preferable to use tert-BuCI as the chlorohydrocarbon. The main drawback of the catalysts prepared by this method is that they do not have sufficiently high activity in the suspension polymerization of ethylene, and they have large particle size (greater than 10 µm).

There is a known method of preparation of a supported titanium-magnesium catalyst, containing titanium tetrachloride on a magnesium-containing support, which is obtained by reaction of a solution of an organomagnesium compound (OMC) of composition MgPh₂·nMgCl₂·mR₂O, (where: Ph = phenyl, R₂O = ether with R=butyl or i-amyl, n = 0.37-0.7, m = 1-2) with carbon tetrachloride and then treatment of the magnesium-containing support obtained with titanium tetrachloride (RU 2064836, B01J31/38, 08.10.96). This method gives a catalyst with controllable particle size in the range from 30 to 3 µm. However, for production of a catalyst with particle size in the range 10-3 µm, as is preferred for the production of UHMWPE, reaction of the OMC with CCl₄ has to be carried out at low temperatures (from -5°C to -15°C); moreover, the process of reaction of the OMC with CCl₄ becomes difficult to control, especially on increasing the volumes of the apparatus and the amount of catalyst produced. Further, the use of CCl₄ has problems associated with its toxicity.

The nearest prior art is a method of preparation of a supported titanium-magnesium catalyst, described in patent RU 2257263, B01J31/38, 07.27.05, in which a magnesium-containing support is obtained by reaction of a solution of an organomagnesium compound (OMC) of composition MgPh₂·nMgCl₂·mR₂O, where: Ph =phenyl, R₂O = ether with R=butyl or i-amyl, n=0.37-0.7, m=1-2, with an alkyl chlorosilane RₓSiCl₄₋ₓ where: R = alkyl, phenyl, x = 1-2.

The main drawback of the catalysts obtained by the known method is the relatively low bulk density of the UHMWPE produced.

An object of the present invention is to provide method for a supported catalyst for the production of polyolefins, such as UHMWPE, which produces polyolefin catalysts with the required particle size and the resultant polyolefin with an increased bulk density compared with existing catalyst systems.

The invention solves the problem of producing a supported catalyst for the synthesis, by suspension polymerization of polyolefins, such as ultra high-molecular weight polyethylene UHMWPE with elevated bulk density and a high yield.

In one embodiment of the present invention there is provided a method for the preparation of a catalyst suitable for the polymerisation of an olefin by contacting a magnesium compound with a halogenized group 4 or 5 metal compound, wherein the magnesium compound is obtained by the reaction of a solution of an organomagnesium compound with a silicon mixture, characterized in that
(a) the organomagnesium compound solution is obtained by contacting metallic magnesium Mg with an aromatic halide RX and an ether, wherein R is an aromatic group containing 6 to 20 carbons and X is a halide, and
(b) the silicon mixture is obtained by mixing a hydrocarbyl halide silane with an alkoxy group or aryloxy group containing silane compound, wherein, the molar ratio of the hydrocarbyl halide silane to the alkoxy group or aryloxy group containing silane compound is between 5 and 100 .

Unexpectedly, this formulation provides catalysts exhibiting elevated bulk density and high yield compared to conventional catalysts known in the art.

The molar ratio of the hydrocarbyl halide silane to the alkoxy group or aryloxy group containing silane compound is preferably in the range 5.5 to 60, more preferably 6 to 40 and even more preferably 10 to 35. The molar ratio within these preferred ranges promotes the formation of polyolefins with increased bulk density. When catalyst yield is also taken into account, a lower limit of the molar ratio of the hydrocarbyl halide silane to the alkoxy group or aryloxy group containing silane compound is preferably, at least 5, more preferably at least 10, and most preferably at least 15, while the upper molar ratio limit is preferably no more than 60 and more preferably no more than 40.

Preferably, the olefin is ethylene and the resultant polyolefin is UHMWPE.

The first step in the process for the preparation of the organomagnesium compound is carried out by contacting metallic magnesium with an aromatic halide RX. All forms of metallic magnesium may be used as metallic magnesium, but preferably use is made of finely divided metallic magnesium, for example magnesium powder.

In the aromatic halide RX, R is an aromatic group preferably containing from 6 to 18 carbon atoms and X preferably is chlorine, bromine or iodine. Preferred aromatic halides include chlorobenzene, bromobenzene and iodobenzene.

The magnesium and the aromatic halide RX are preferably brought into contact with one another in the presence of an inert dispersant and an ether. Examples of dispersants are: aliphatic, alicyclic or aromatic solvents containing 4-10 carbon atoms. Preferably, chlorobenzene is also used as an insert dispersant.

An ether are generally compound having the formula ROR, Ar-O-Ar or R-O-Ar in which R is alkyl and Ar is aryl. Examples of ethers include, but are not limited to diethyl ether, diisopropyl ether, di-n-butyl ether, di-tert-butyl ether, diisobutyl ether, diisoamyl ether, diallyl ether, tetrahydrofuran (THF) and anisole. It is preferred for di-n-butyl ether and/or diisoamyl ether to be used.

The aromatic halide/ether ratio is important with respect to obtaining an active catalyst. The aromatic halide/ ether (eg. chlorobenzene/dibutyl ether) volume ratio may for example vary between 5:1 and 1:2. When the aromatic halide/ ether ratio decreases, the bulk density of the polyolefin powder prepared with the aid of the catalyst becomes lower and when the aromatic halide/ ether increases, the amount of the dissolved reaction product becomes lower. Consequently, the particularly good results are obtained when the aromatic halide/ ether volume ratio is between 4:1 and 3:1. Examples of alkyl halides are butyl chloride, butyl bromide and 1,2-dibromoethane. The reaction temperature for step a normally is between 20 and 150°C the reaction time between 0.5 and 20 hours.

The alkoxy group or aryloxy group- containing silane compounds include, but are not limited to: tetramethoxysilane, tetraethoxysilane, tetrabutoxysilane, tetraisobutoxysilane, tetraphenoxysilane, tetra(p- methylphenoxy)silane, tetrabenzyloxysilane, methyltrimethoxysilane, methyltriethoxysilane, methyltributoxysilane, methyltriphenoxysilane, methyltriphenoxysilane, ethyltriethoxysilane, ethyl triisobutoxysilane, ethyltriphenoxysilane, butyltrimethoxysilane, butyltriethoxysilane, butyltributoxysilane, butyltriphenoxysilane, isobutyltriisobutoxysilane, vinyl triethyloxysilane, allyltrimethoxysilane, phenyltrimethoxysilane, phenyltriethoxysilane, benzyltriphenoxysilane, ethyltriallyloxysilane, dimethyldimethoxysilane, dimethyldiethox silane, dimethyldiisopropyloxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropyloxysilane, dibutyldibutoxysilane, dibutyldiphenoxysilane, diisobutyldiethoxysilane, diisobutyldiisobutoxysilane, diphenyl methoxy silane, diphenyldiethox silane, diphenyl dibutoxysilane, dibenzyldiethoxysilane, divinyl diphenoxysilane, diallyldipropoxysilane, diphenyldiallyloxysilane, methylphenyldimethoxysilane and chlorophenyldiethyoxysilane.

The hydrocarbyl halide silane has the formula R¹ₖSiX₄₋ₖ, where X = Cl, R¹ = methyl or phenyl and k = 1 (e.g. PhSiCl₃ or MeSiCl₃).

Preferably, the organomagnesium compound is contacted with the silicon mixture in the presence of an inert hydrocarbon solvent such as the solvents previously mentioned as dispersant. Preferably, agitation or stirring is employed to combine and promote the reaction between the organomagnesium compound and silicon mixture. The product of the reaction is rinsed or washed with an inert hydrocarbon solvent and then used for the preparation of the catalyst.

In one embodiment of the present invention, the aromatic halide RX is chlorobenzene and the organomagnesium compound solution includes a compound with the formula Mg(C₆H₅)₂•nMgCl₂•mR₂O, where: n = 0.37-0.7, m > 1, R₂O is ether with R = i-Am (diisoamyl ether), n-Bu (di-n-butyl ether). Theoretically the organomagnesium compound is Mg(C₆H₅)₂•0.5MgCl₂•2R₂O, (i.e. n= is preferably 0.5 and m is preferably 2) however the proportions of MgCl₂ and ether may fluctuate dependant upon the method of characterisation of the compound in solution (e.g. by solid state or solution NMR) The empirical formula of the organomagnesium compound in the organomagnesium solution may be determined through NMR and elemental analysis (e.g. ICP-AES).

The molar ratio of the alkoxy group or aryloxy group containing silane compound to Mg is preferably 0.02 to 1.0 and more preferably 0.05 to 0.3. A higher ratio results in a larger catalyst particle size and a polymer with reduced molecular weight, which is generally undesired.

The molar ratio of the hydrocarbyl halide silane to Mg is 1 to 2.5 and more preferably 1.6 to 2.0. A ratio with these preferred ranges produces an increased yield.

Preferably, the reaction of the organomagnesium compound with the silicon mixture carried out at a temperature in the range of -10 to 60°C, and more preferably between 10 to 30°C. Temperatures within this range tend to produce a small catalyst particle size (E.g. 10µm or less).

In a preferred embodiment, the catalyst is obtained with the organomagnesium solution, as previously described and a silicon mixture using, as the silicon mixture the mixture obtained by the mixing of PhSiCl₃ or MeSiCl₃ with silicon tetraethoxide Si(OEt)₄, at molar ratio PhSiCl₃ or MeSiCl₃/Si(OEt)₄ = 6-40, preferably at a molar ratio of Si(OEt)₄/Mg of 0.05-0.3 and preferably at a molar ratio of PhSiCl₃ or MeSiCl₃/Mg of 1.6- 2.0, at a preferred temperature of 10 - 30°C.

Using conventional methods, the catalyst support is then combined with the halogenized group 4 or 5 metal. The group 4 or 5 metal is preferably Ti or V, and more preferably Ti. In one special embodiment, the halogenized group 4 or 5 metal includes an alkoxy group or aryloxy group, such as Ti(OEt)₂Cl₂ or Ti(OEt)₃Cl.

The catalyst support after treatment with the halogenized group 4 or 5 metal (eg. TiCl₄) is washed with a suitable solvent (eg. heptane) to obtain the catalyst.

The proposed method of catalyst production provides production of polyethylene at high yield and with high bulk density preferably in the range 0.38 - 0.55 g/cm³ and more preferably 0.39 to 0.45. In a special embodiment, the bulk density is preferably greater than 0.39, more preferably greater and 0.42 and even more preferably greater than 0.45 and most preferably greater than 0.48 g/cm³ (achieved in the absence of bulk density processing aids, such as calcium stearate).

The catalyst yield is preferably at least 6, more preferably at least 9, even more preferably at least 12 and most preferably at least 15 kg of polymer per gram of catalyst.

The catalyst of the invention is suitable for the preparation of polyolefins by polymerising an olefin in the presence of the catalyst and an organometallic compound containing a metal from group 1, 2, 12 or 13 of the Periodic System of the Elements (Handbook of Chemistry and Physics, 70th Edition, CRC Press, 1989-1990). Preferably the organometallic compound is an organoaluminium compound. As the organoaluminium compound use is made of compounds having the formula RₙAlX₃₋ₙ, where X is a halogen atom, an alkoxy group or a hydrogen atom, R is an alkyl group or an aryl group and 1<n<3. Examples of organoaluminium compounds are trialkyl aluminum (eg. triisobutyl aluminum or triethyl aluminum trimethyl aluminium), dimethyl aluminium chloride, diethyl aluminium chloride, diethyl aluminium iodide, diisobutyl aluminium chloride, methyl aluminium dichloride, ethyl aluminium dichloride, ethyl aluminium dibromide, isobutyl aluminium dichloride, ethyl aluminium sesquichloride, dimethyl aluminium methoxide, diethyl aluminium phenoxide, dimethylaluminium hydride and diethyl aluminium hydride.

In another embodiment of the present invention, there is provided a process of polymerization of ethylene in suspension conditions in a hydrocarbon solvent in the presence of a catalyst, the composition of which comprises a group 4 or 5 metal (eg. Ti) compound on a magnesium-containing support, characterized in that the catalyst is prepared according to any one of the previously described methods and is used in combination with a trialkyl aluminum cocatalyst.

In a preferred embodiment, polymerization is carried out in suspension conditions at a temperature of 30°C to 85°C and more preferably 40-70°C in a hydrocarbon solvent (e.g. hexane, heptane) at ethylene pressure ≥ 1 bar, in the presence of a cocatalyst, such as trialkyl aluminum (triisobutyl aluminum or triethyl aluminum).

Ultra high molecular weight polyethylene produced according to the present invention preferably comprises the following properties:
- a bulk density of greater than 0.39 g/cm³, preferably greater than 0.42 g/cm³ and more preferably greater than 0.45 g/cm³ and most preferably greater than 0.48 g/cm³ (achieved in the absence of bulk density increasing additives, such as calcium stearate);
- a particle size of less than 200µm, preferably less than 180 µm;
- a span of less than 1.0, preferably less than 0.8; and/or
- a residual group 4 or 5 metal content of less than 5 ppm, preferably less than 2 ppm and most preferably less than 1ppm.

Preferably the UHMWPE comprising at least 3 of the 4 abovementioned properties. More preferably, the UHMWPE comprises all of the abovementioned properties. Even more preferably, the UHMWPE comprises all the abovementioned properties in their most preferred range.

The combination of the above properties provides a UHMWPE with an excellent balance between processability and mechanical properties and, as such, the UHMWPE may be used in the production of fibers and tapes. Further, the low residual metal content makes the material suitable for specialised applications, such as biomedical applications. A commercial method of removing trace components, such as catalyst residues, from UHMWPE is not available. Therefore, the control and reduction of impurities levels is particularly dependent upon the method of preparation.

In a special embodiment, the problem is solved in that a support for a supported titanium-magnesium catalyst is obtained by reaction of a solution of an organomagnesium compound of composition Mg(C₆H₅)₂•nMgCl₂•mR₂O, where: n = 0.37-0.7, m = 2, R₂O is ether with R = i-Am (diisoamyl ether), n-Bu (di-n-butyl ether), with a silicon compound, using, as the silicon mixture, the mixture obtained by the mixing of PhSiCl₃ or MeSiCl₃ with silicon tetraethoxide Si(OEt)₄, at molar ratio PhSiCl₃ or MeSiCl₃/Si(OEt)₄ = 6-40, at ratio Si(OEt)₄/Mg = 0.05-0.3 and PhSiCl₃ or MeSiCl₃/Mg = 1.6- 2.0, at a temperature of 10 - 30°C.

In this special embodiment of the present invention there is provided a method of production of a supported catalyst for the synthesis of ultra high molecular weight polyethylene in suspension conditions in a hydrocarbon solvent, comprising a titanium compound on a magnesium-containing support, which is obtained by reaction of a solution of an organomagnesium compound of composition: Mg(C₆H₅)₂•nMgCl₂•mR₂O, where: n = 0.37-0.7, m = 2, R₂O is ether with R = i-Am, n-Bu, with a silicon mixture characterized in that the silicon mixture used is the mixture obtained by the mixing of PhSiCl₃ or MeSiCl₃ with silicon tetraethoxide Si(OEt)₄, at molar ratio PhSiCl₃ or MeSiCl₃/Si(OEt)₄ = 6 - 40.

Preferably, the reaction of an organomagnesium compound with the silicon mixture of the aforementioned composition is carried out at a temperature of 10-30°C.

Preferably, the ratio Si(OEt)₄/Mg = 0.05- 0.3 and PhSiCl₃ or MeSiCl₃/Mg = 1.6-2.0.

The invention also relates to a process of polymerization of ethylene in suspension conditions in a hydrocarbon solvent in the presence of a catalyst, the composition of which comprises a titanium compound on a magnesium-containing support, characterized in that a catalyst prepared as previously described and used in combination with a trialkyl aluminum cocatalyst.

The characteristics of the invention are illustrated by the following examples.

### Test methods

The bulk density is determined according to ISO 60 at 23°C / 50% relative humidity.

The average particle size of the polymer is determined in accordance with ISO 13320-2, using a Malvern™ LLD particle size analyzer.

The average size of the catalyst is determined using a Malvern™ LLD particle size analyzer.

The span of the polymer is defined as (D90-D10)/D50 and is determined using a Malvern™ LLD particle size analyzer.

### Example 1.

### (A) Preparation of a solution of an organomagnesium compound.

A glass reactor with a cubic capacity of 1 I, equipped with a stirrer and a thermostat, is loaded with 29.2 g of magnesium powder (1.2 mol) in 450 ml chlorobenzene (4.4 mol), 203 ml dibutyl ether (DBE) (1.2 mol) and an activating agent, comprising a solution of 0.05 g iodine in 3 ml butyl chloride. The reaction is preferably carried out in an inert gas atmosphere (nitrogen, argon) at a temperature from 80 to 100°C for 10 h. At the end of reaction, the reaction mixture obtained is left to stand and the liquid phase is separated from the sediment. The liquid phase is a chlorobenzene solution of an organomagnesium compound of composition MgPh₂•0.49MgCl₂ •2(Bu)₂O at a concentration of 1.0 mol Mg/l.

### (B) Synthesis of the support.

200 ml of the solution obtained (0.2 mol Mg) is placed in a stirred reactor and a solution of a mixture of PhSiCl₃ (64 ml) and Si(OEt)₄ (2.2 ml) at molar ratio 40:1, (Si(OEt)₄/Mg =0.05, PhSiCl₃/Mg= 2.0) is fed into the reactor at a temperature of 15°C in 2.3 h. Then the reaction mixture is heated to 60°C in 30 min and is held at this temperature for 1 h. After removing the mother liquor, the sediment that formed is washed with heptane 4 times, with 250 ml each time, at a temperature of 20°C. 33 g of powdered magnesium-containing support is obtained in the form of a suspension in heptane.

22 ml TiCl₄ is added to the suspension of magnesium-containing support in 150 ml heptane (TiCl₄/Mg = 1), the reaction mixture is heated to 60°C and is held, while stirring, for 2 h, then the solid precipitate is left to settle and is washed with heptane at a temperature of 60-70°C, 5 x 200 ml. A supported catalyst with titanium content of 1.2 wt.% is obtained.

Polymerization of ethylene is carried out in a steel reactor with cubic capacity of 0.8 I, equipped with a stirrer and a jacket for thermostatic control. The solvent used for polymerization is heptane (250 ml) and the cocatalyst is triethyl aluminum (AlEt₃) at a concentration of 1.4 mmol/l. Polymerization is carried out at a temperature of 60°C, ethylene pressure 4 atm. for 3 h. The polymerization results are shown in the table.

### Example 2.

Catalyst is obtained in the conditions of example 1, except for the use of a mixture of PhSiCl₃ and Si(OEt)₄ at molar ratio 18:1, (Si(OEt)₄/Mg = 0.1, PhSiCl₃/Mg= 1.8). The catalyst contains 1.2 wt.% titanium. Polymerization of ethylene is carried out in the conditions of example 1, except that the polymerization temperature is 70°C, and the polymerization time is 3.5 h. The polymerization results are shown in the table.

### Example 3.

Catalyst is obtained in the conditions of example 2, except that the temperature of reaction of the mixture of PhSiCl₃ and Si(OEt)₄ with the organomagnesium compound is 10°C. The catalyst contains 1.6 wt.% titanium. Polymerization of ethylene is carried out in the conditions of example 2, except that firstly a mixture of ethylene and 5 vol.% propylene is used for polymerization for 5 min at a pressure of 1 atm, and then polymerization is carried out at ethylene pressure of 3 atm for 3 h. The polymerization results are shown in the table.

### Example 4.

Catalyst is obtained in the conditions of example 1, except that a mixture of PhSiCl₃ and Si(OEt)₄ is used at molar ratio 6:1, Si(OEt)₄/Mg = 0.3, PhSiCl₃/Mg = 1.8. The catalyst contains 2.1 wt.% titanium. Polymerization of ethylene is carried out in the conditions of example 3 for 4 h. The polymerization results are shown in the table.

### Example 5.

Synthesis of the catalyst is carried out as in example 2, except that an organomagnesium compound of composition MgPh₂•0.49MgCl₂•2(i-Am)₂O is used at a concentration of 0.9 mol Mg/l. The catalyst contains 1.8 wt.% titanium. Polymerization of ethylene is carried out in the conditions of example 3, except that the polymerization temperature is 60°C. The polymerization results are shown in the table.

### Example 6.

Synthesis of the catalyst is carried out as in example 5, except that MeSiCl₃ is used instead of PhSiCl₃ and the reaction of an organomagnesium compound with MeSiCl₃/Si(OEt)₄ mixture is carried out at a temperature of 20°C. The catalyst contains 2.4 wt.% titanium. Polymerization of ethylene is carried out in the conditions of example 3 for 1.2 h. The polymerization results are shown in the table.

### Example 7.

Synthesis of the catalyst is carried out as in example 2, except that the reaction of an organomagnesium compound with PhSiCl₃/Si(OEt)₄ mixture is carried out at a temperature of 30°C, and a mixture of PhSiCl₃ and Si(OEt)₄ is used at a molar ratio of 16:1, (Si(OEt)₄/Mg = 0.1, PhSiCl₃/Mg = 1.6). The catalyst contains 2.0 wt.% titanium. Polymerization of ethylene is carried out in the conditions of example 3 for 3.3 h. The polymerization results are shown in the table.

### Examples 8 and 9.

Synthesis of the catalyst is carried out as in example 5. The catalysts of examples 8 & 9 contain 2.5 wt% and 1.7 wt% titanium respectively. Polymerization of ethylene is carried out in the conditions of example 5, except that the ethylene pressure is 4 atm. and the polymerization is carried out in a steel reactor with cubic capacity of 10 l, equipped with a stirrer and a jacket for thermostatic control. The solvent used for polymerization is heptane (4.5 l) and the cocatalyst is triethyl aluminum (AIEt3) at a concentration of 1.02 mmol/l. The polymerization results are shown in the table.

### Example 10.

Synthesis of the catalyst is carried out as in example as in example 2, except that the reaction of an organomagnesium compound with PhSiCl₃/Si(OEt)₄ mixture is carried out at a temperature of 10°C and a mixture of PhSiCl₃ and Si(OEt)₄ is used at a molar ratio of 59:1. The catalyst contains 5.0 wt.% titanium. The polymerization was performed according to example 9. The polymerization results are shown in the table.

### Example 11.

The halogenized group 4 or 5 metal compound is prepared by the interaction of TiCl₄ and Si(OEt)₄ (molar ratio 1:1) to produce Ti(OEt)₂Cl₂ as determined by NMR. The support is prepared according to example 9, and subsequently treated with diethyl aluminium chloride (DEAC) (Al/Mg=1.5, 50°C, 1 h) and after washing of this support by heptane, Ti(OEt)₂Cl₂ (the amount of this component corresponded to 2.5 % wt. Ti of the weight of the support) was added to the support (60°C,1 h). The polymerization was performed according to example 9, except that the polymerisation time was reduced to 3 hr.

### Example 12.

Synthesis of the catalyst is carried out as in example 9, except that DBE is the ether in the OMC. The polymerization was performed according to example 9, except that the polymerisation time was increased to 4.5 hr, ethylene at 5 atm. was used and a comonomer of propylene (0.3 wt%) was added to the reactor during polymerisation.

### Example 13.

Synthesis of the catalyst is carried out as in example 12, except that DIAE is the ether in the OMC, a higher temperature (71°C), shorter polymerisation time (4 hr) and a higher ethylene pressure are used in the polymerisation step.

### Comparative Experiment A.

Catalyst is obtained in accordance with patent RF No. 2257263 in the conditions of example 5, except that PhSiCl₃ is used at a ratio Si/Mg = 1.8 for reaction with the organomagnesium compound during production of the support. The catalyst contains 1.0 wt.% titanium. Polymerization of ethylene is carried out in the conditions of example 5 for 2 h. The polymerization results are shown in the table.

The residual Ti content in the examples were determined to be generally less than 2 ppm, with some examples being less than 1 ppm.

It can be seen from the above examples and the table that with the catalyst prepared according to the method proposed in the invention, it is possible to obtain UHMPE with an elevated bulk density PE ≥ 0.39 g/cm³ in comparison with a catalyst prepared according to the prior art (PhSiCl₃ as the chlorinating agent without additions of tetraethoxysilane; comparative experiment A). In the latter case, the polymer obtained has a lower bulk density (compare example 5 and comparative experiment A, carried out under identical polymerization conditions).

**Table 1**

| Ex. No. | Ether (OMC) | RSiCl₃ Si(OEt)₄ | Si(OEt)₄/ Mg | RSiCl₃ Mg | T₁¹⁾ °C | Ti, wt.% | PC₂H₄ atm | T₂²⁾, °C | Time, h | Yield, kg PE/g cat | Bulk density of PE, g/cm³ | D⁵⁰PE, µm | d⁵⁰cat, µm | Span of PE |
|---|---|---|---|---|---|---|---|---|---|---|---|---|---|---|
| 1 | DBE | 40 | 0.05 | 2.0 | 15 | 1.2 | 4 | 60 | 3 | 11.7 | 0.39 | 120 | 5.3 | 0.61 |
| 2 | DBE | 18 | 0.1 | 1.8 | 15 | 1.2 | 4 | 70 | 3.5 | 12.1 | 0.40 | 150 | 6.7 | 0.84 |
| 3 | DBE | 20 | 0.1 | 2.0 | 10 | 1.6 | 3 | 70 | 3 | 10.0 | 0.44 | 122 | 5.7 | 0.52 |
| 4 | DBE | 6 | 0.3 | 1.8 | 15 | 2.1 | 3 | 70 | 4 | 9.0 | 0.41 | 130 | 6.3 | 0.73 |
| 5 | DIAE | 18 | 0.1 | 1.8 | 15 | 1.8 | 3 | 60 | 4 | 29.8 | 0.45 | 122 | 4.0 | 0.90 |
| 6 | DIAE | 18 | 0.1 | 1.8 | 20 | 2.4 | 3 | 70 | 1.2 | 14.0 | 0.40 | 85 | 3.5 | 0.95 |
| 7 | DBE | 16 | 0.1 | 1.6 | 30 | 20 | 3 | 70 | 3.3 | 12.0 | 0.44 | 162 | 7.1 | 0.95 |
| 8 | DIAE | 18 | 0.1 | 1.8 | 15 | 2.5 | 4 | 60 | 4 | 35.8 | 0.43 | 147 | 4.6 | 0.64 |
| 9 | DIAE | 18 | 0.1 | 1.8 | 15 | 1.7 | 4 | 60 | 4 | 26.2 | 0.42 | 151 | 4.9 | 0.65 |
| 10 | DIAE | 59 | 0.1 | 1.8 | 10 | 5.0 | 4 | 60 | 4 | 6.2 | 0.41 | 192 | 10 | 0.97 |
| 11 | DIAE | 18 | 0.1 | 1.8 | 15 | 0.66 | 4 | 60 | 3 | 11.1 | 0.41 | 110 | 5.0 | 0.60 |
| 12 | DBE | 18 | 0.1 | 1.8 | 15 | 1.2 | 5 | 60 | 4.5 | 15.0 | 0.46 | 143 | 5.7 | 0.85 |
| 13 | DIAE | 18 | 0.1 | 1.8 | 15 | 1.8 | 5 | 71 | 4 | 52.4 | 0.49 | 138 | 4.2 | 0.63 |
| A | DIAE | - | - | 1.8 | 15 | 1.0 | 3 | 60 | 2 | 14.4 | 0.33 | 150 | 5.6 | 0.61 |

| | | | | | | | | | | | | | | |
|---|---|---|---|---|---|---|---|---|---|---|---|---|---|---|
| ¹⁾temperature of reaction of the OMC with the silicon mixture/compound ²⁾polymerization temperature (Ratios are based upon molar% of the components | | | | | | | | | | | | | | |

## Claims

1. A method for the preparation of a catalyst suitable for the polymerisation of an olefin by contacting a magnesium compound with a halogenized group 4 or 5 metal compound, wherein a solution of an organomagnesium compound is reacted with a silicon mixture obtaining the magnesium compound, wherein
(a) metallic magnesium Mg is contacted with an aromatic halide RX and an ether, wherein R is an aromatic group containing 6 to 20 carbons and X is a halide obtaining the solution of the organomagnesium compound, and
(b) mixing a hydrocarbyl halide silane with an alkoxy group or aryloxy group containing silane compound obtaining the silicon mixture,
wherein the hydrocarbyl halide silane is PhSiCl₃ or MeSiCl₃,
**characterized in that** the molar ratio of the hydrocarbyl halide silane to the alkoxy group or aryloxy group containing silane compound is between 5 and 100.

2. The method of claim 1, wherein the alkoxy group or aryloxy group containing silane compound is tetraethoxysilane Si(OEt)₄.

3. The method according to anyone of the preceding claims wherein the reaction of the organomagnesium compound with the silicon mixture is carried out at a temperature in the range of -10 to 60°C.

4. The method according to any one of the preceding claims, wherein the molar ratio of the alkoxy group or aryloxy group containing silane compound /Mg is in the range 0.02 to 1.0.

5. The method according to any one of the preceding claims, wherein the molar ratio and of the hydrocarbyl halide silane /Mg is in the range 1.0 to 2.5.

6. The method according to claim 1, wherein the olefin is ethylene, the halogenized group 4 metal compound is titanium tetrachloride, the aromatic halide is chlorobenzene, the ether is di-n-butyl ether or diisoamyl ether, the hydrocarbyl halide silane is PhSiCl₃ or MeSiCl₃; the alkoxy group or aryloxy group containing silane compound is tetraethoxysilane Si(OEt)₄, and the molar ratio of the hydrocarbyl halide silane to the alkoxy group or aryloxy group containing silane compound is between 5 and 60.

7. Method according to claim 1 wherein the catalyst is a supported catalyst for the synthesis of ultra high molecular weight polyethylene in suspension conditions in a hydrocarbon solvent, comprising a titanium compound on a magnesium-containing support, whereby a solution of an organomagnesium compound of composition Mg(C₆H₅)₂•nMgCl₂•mR₂O, where: n = 0.37-0.7, m = 2, R₂O is ether with R = i-Am, n-Bu, is reacted with a mixture of PhSiCl₃ or MeSiCl₃ and silicon tetraethoxide Si(OEt)₄ at molar ratio PhSiCl₃ or MeSiCl₃/Si(OEt)₄ = 6 - 40.

8. Method according to Claim 13, **characterized in that** the reaction of an organomagnesium compound with the silicon compound of the aforementioned composition is carried out at a temperature of 10-30°C.

9. Method according to Claim 13, **characterized in that** the ratio Si(OEt)₄/Mg = 0.05- 0.3 and PhSiCl₃ or MeSiCl₃/Mg = 1.6- 2.0.

10. Process of polymerization of ethylene in suspension conditions in a hydrocarbon solvent in the presence of a catalyst, the composition of which comprises a titanium compound on a magnesium-containing support, **characterized in that** a catalyst prepared according to any one of Claims 7 to 9 is used in combination with a trialkyl aluminum cocatalyst.

## Patentansprüche

1. Verfahren zur Herstellung eines Katalysators, der für die Polymerisation eines Olefins geeignet ist, durch Inberührungbringen einer Magnesiumverbindung mit einer halogenierten Verbindung eines Metalls der Gruppe 4 oder 5, wobei eine Lösung einer Organomagnesiumverbindung mit einer Siliciummischung umgesetzt wird, wobei die Magnesiumverbindung erhalten wird, wobei
(a) metallisches Magnesium Mg mit einem aromatischen Halogenid RX und einem Ether in Berührung gebracht wird, wobei R für eine aromatische Gruppe mit 6 bis 20 Kohlenstoffatomen steht und X für ein Halogenid steht, wobei die Lösung der Organomagnesiumverbindung erhalten wird, und
(b) ein Hydrocarbylhalogenidsilan mit einer Alkoxygruppen oder Aryloxygruppen enthaltenden Silanverbindung gemischt wird, wobei die Siliciummischung erhalten wird,
wobei es sich bei dem Hydrocarbylhalogenidsilan um PhSiCl₃ oder MeSiCl₃ handelt,
**dadurch gekennzeichnet, dass** das Molverhältnis von Hydrocarbylhalogenidsilan zu Alkoxygruppen oder Aryloxygruppen enthaltender Silanverbindung zwischen 5 und 100 liegt.

2. Verfahren nach Anspruch 1, bei dem es sich bei der Alkoxygruppen oder Aryloxygruppen enthaltenden Silanverbindung um Tetraethoxysilan Si(OEt)₄ handelt.

3. Verfahren nach einem der vorhergehenden Ansprüche, bei dem man die Umsetzung der Organomagnesiumverbindung mit der Siliciummischung bei einer Temperatur im Bereich von -10 bis 60 °C durchführt.

4. Verfahren nach einem der vorhergehenden Ansprüche, bei dem das Molverhältnis von Alkoxygruppen oder Aryloxygruppen enthaltender Silanverbindung/Mg im Bereich von 0,02 bis 1,0 liegt.

5. Verfahren nach einem der vorhergehenden Ansprüche, bei dem das Molverhältnis von Hydrocarbylhalogenidsilan/Mg im Bereich von 1,0 bis 2,5 liegt.

6. Verfahren nach Anspruch 1, bei dem es sich bei dem Olefin um Ethylen handelt, es sich bei der halogenierten Metallverbindung der Gruppe 4 um Titantetrachlorid handelt, es sich bei dem aromatischen Halogenid um Chlorbenzol handelt, es sich bei dem Ether um Di-n-butylether oder Diisoamylether handelt, es sich bei dem Hydrocarbylhalogenidsilan um PhSiCl₃ oder MeSiCl₃ handelt, es sich bei der Alkoxygruppen oder Aryloxygruppen enthaltenden Silanverbindung um Tetraethoxysilan Si(OEt)₄ handelt und das Molverhältnis von Hydrocarbylhalogenidsilan zu Alkoxygruppen oder Aryloxygruppen enthaltender Silanverbindung zwischen 5 und 60 liegt.

7. Verfahren nach Anspruch 1, bei dem es sich bei dem Katalysator um einen geträgerten Katalysator für die Synthese von ultrahochmolekularem Polyethylen unter Suspensionsbedingungen in einem Kohlenwasserstoff-Lösungsmittel handelt, der eine Titanverbindung auf einem magnesiumhaltigen Träger umfasst, wobei eine Lösung einer Organomagnesiumverbindung der Zusammensetzung Mg(C₆H₅)₂• MgCl₂• R₂O, wobei: n = 0,37-0,7, m = 2, R₂O Ether mit R = i-Am, n-Bu ist, mit einer Mischung von PhSiCl₃ oder MeSiCl₃ und Siliciumtetraethoxid Si(OEt)₄ in einem Molverhältnis PhSiCl₃ oder MeSiCl₃/Si(OEt)₄ = 6-40 umgesetzt wird.

8. Verfahren nach Anspruch 13, **dadurch gekennzeichnet, dass** die Umsetzung einer Organomagnesiumverbindung mit der Siliciumverbindung der obigen Zusammensetzung bei einer Temperatur von 10-30 °C durchgeführt wird.

9. Verfahren nach Anspruch 13, **dadurch gekennzeichnet, dass** das Verhältnis Si(OEt)₄/Mg = 0,05-0,3 und PhSiCl₃ oder MeSiCl₃/Mg = 1,6-2,0.

10. Verfahren zur Polymerisation von Ethylen unter Suspensionsbedingungen in einem Kohlenwasserstoff-Lösungsmittel in Gegenwart eines Katalysators, dessen Zusammensetzung eine Titanverbindung auf einem magnesiumhaltigen Träger umfasst, **dadurch gekennzeichnet, dass** ein nach einem der Ansprüche 7 bis 9 hergestellter Katalysator in Kombination mit einem Trialkylaluminium-Cokatalysator verwendet wird.

## Revendications

1. Procédé pour la préparation d'un catalyseur approprié pour la polymérisation d'une oléfine, par la mise en contact d'un composé de magnésium avec un composé halogéné d'un métal du groupe 4 ou 5, dans lequel une solution d'un composé d'organomagnésium est mise à réagir avec un mélange de silicone pour obtenir le composé de magnésium, dans lequel
(a) du magnésium Mg métallique est mis en contact avec un halogénure aromatique RX et un éther, R étant un groupe aromatique contenant 6 jusqu'à 20 carbones et X étant un halogénure pour obtenir la solution du composé d'organomagnésium et
(b) on mélange un hydrocarbylhalogénosilane avec un composé de silane contenant un groupe alcoxyle ou un groupe aryloxyle pour obtenir le mélange de silicone,
l'hydrocarbylhalogénosilane étant PhSiCl₃ ou MeSiCl₃,
**caractérisé en ce que** le rapport molaire de l'hydrocarbylhalogénosilane au composé de silane contenant un groupe alcoxyle ou un groupe aryloxyle se situe entre 5 et 100.

2. Procédé selon la revendication 1, dans lequel le composé de silane contenant un groupe alcoxyle ou un groupe aryloxyle est le tétraéthoxysilane Si(OEt)₄.

3. Procédé selon l'une quelconque des revendications précédentes, dans lequel la réaction du composé d'organomagnésium avec le mélange de silicone est mise en oeuvre à une température dans la plage de -10 jusqu'à 60°C.

4. Procédé selon l'une quelconque des revendications précédentes, dans lequel le rapport molaire du composé de silane contenant un groupe alcoxyle ou un groupe aryloxyle/Mg se situe dans la plage de 0,02 jusqu'à 1,0.

5. Procédé selon l'une quelconque des revendications précédentes, dans lequel le rapport molaire de l'hydrocarbylhalogénosilane/Mg se situe dans la plage de 1,0 jusqu'à 2,5.

6. Procédé selon la revendication 1, dans lequel l'oléfine est l'éthylène, le composé halogéné de métal du groupe 4 est le tétrachlorure de titane, l'halogénure aromatique est le chlorobenzène, l'éther est le di-n-butyléther ou le diisoamyléther, l'hydrocarbylhalogénosilane est PhSiCl₃ ou MeSiCl₃ ; le composé de silane contenant un groupe alcoxyle ou un groupe aryloxyle est le tétraéthoxysilane Si(OEt)₄ et le rapport molaire de l'hydrocarbylhalogénosilane au composé de silane contenant un groupe alcoxyle ou un groupe aryloxyle se situe entre 5 et 60.

7. Procédé selon la revendication 1, le catalyseur étant un catalyseur supporté pour la synthèse de polyéthylène à ultra haut poids moléculaire dans des conditions de suspension dans un solvant hydrocarboné, comprenant un composé de titane sur un support contenant du magnésium, par lequel une solution d'un composé d'organomagnésium de composition Mg(C₆H₆)₂.nMgCl₂.mR₂O, où : n = 0,37 à 0,7, m = 2, R₂O est un éther avec R = i-am, n-bu, est mis à réagir avec un mélange de PhSiCl₃ ou de MeSiCl₃ et de tétraéthoxyde de silicium Si(OEt)₄ selon un rapport molaire PhSiCl₃ ou MeSiCl₃/Si(OEt)₄ = 6 à 40.

8. Procédé selon la revendication 13, **caractérisé en ce que** la réaction d'un composé d'organomagnésium avec le composé de silicone de la composition mentionnée précédemment est mise en oeuvre à une température de 10 à 30°C.

9. Procédé selon la revendication 13, **caractérisé en ce que** le rapport Si(OEt)₄/Mg = 0,05 à 0,3 et PhSiCl₃ ou MeSiCl₃/Mg = 1,6 à 2,0.

10. Procédé de polymérisation d'éthylène dans des conditions de suspension dans un solvant hydrocarboné en présence d'un catalyseur, la composition de celui-ci comprenant un composé de titane sur un support contenant du magnésium, **caractérisé en ce qu'**un catalyseur préparé selon l'une quelconque des revendications 7 à 9 est utilisé en combinaison avec un co-catalyseur de type trialkylaluminium.
